# EUROPEAN PATENT APPLICATION

(11) **EP 4 599 718 A1**
(43) Date of publication of application: **13.08.2025**
(21) Application number: 24156906.0
(22) Date of filing: 09.02.2024
(51) Int. Cl.: A24F 40/50, A24F 40/53, A24F 40/65

(54) **AEROSOL-GENERATING APPARATUS COMPRISING A PROCESSOR TO CONTROL WIRELESS COMMUNICATIONS**

(71) Applicant: Imperial Tobacco Limited, Bristol, BS3 2LL (GB)
(72) Inventor: The designation of the inventor has not yet been filed
(74) Representative: Mewburn Ellis LLP

(57) **Abstract**

An aerosol-generating apparatus is provided comprising: an aerosol-generating unit configured to generate an aerosol from an aerosol precursor, and a processor configured to execute a plurality of processing threads for operating the aerosol-generating apparatus. The plurality of processing threads includes a communications processing thread for administering operating wireless communications, and one or more apparatus control threads for controlling the aerosol-generating unit. The processor is configured to detect a trigger event, the trigger event being one of a plurality of trigger events detectable by the processor The plurality of trigger events comprises a first subgroup of trigger events and the processor is configured to disable one or more functions of the wireless communications upon detection of a trigger event from the first subgroup.

## Description

### FIELD

The present disclosure relates to an aerosol-generating apparatus and a method for controlling the aerosol-generating apparatus.

### BACKGROUND

A typical aerosol-generating apparatus may comprise a power supply, an aerosol-generating unit that is driven by the power supply, an aerosol precursor, which in use is aerosolised by the aerosol-generating unit to generate an aerosol, and a delivery system for delivery of the aerosol to a user. Typically, the aerosol-generating unit may comprise a heating system which is configured to heat the aerosol precursor to generate the aerosol during a heating session of the apparatus. The heating system is controlled by a processing resource in order to heat the aerosol precursor to a desired temperature.

In addition, some aerosol-generating apparatuses may include wireless communication capabilities for exchanging data with a peripheral device. The wireless communication capabilities are typically operated by the processing resource which administers a wireless communication protocol.

However, the present inventors have found that aerosol-generating apparatuses with wireless communication capabilities may be prone to experiencing timing jitter in the control functions of the apparatus such as temperature control of the heating system. Additionally, continuously operating the wireless communications may consume a lot of power and may reduce the battery life of aerosol-generating apparatuses.

In spite of the effort already invested in the development of aerosol-generating apparatuses/systems further improvements are desirable.

### SUMMARY

Broadly, the present invention relates to an aerosol-generating apparatus with wireless communication capabilities which is configured to implement more accurate hardware control and extend battery life by disabling aspects of the wireless communications under certain conditions such as when the apparatus is being used to generate an aerosol.

In a first aspect, the present disclosure provides an aerosol-generating apparatus comprising:
an aerosol-generating unit configured to generate an aerosol from an aerosol precursor, and
a processor configured to execute a plurality of processing threads for operating the aerosol-generating apparatus, the plurality of processing threads including a communications processing thread for operating wireless communications, and one or more apparatus control threads for controlling the aerosol-generating unit; wherein:
   the processor is configured to detect a trigger event, the trigger event being one of a plurality of trigger events detectable by the processor, the plurality of trigger events comprising a first subgroup of trigger events;
   wherein the processor is configured to disable one or more functions of the wireless communications upon detection of a trigger event from the first subgroup.

In this way, processor may be configured to disable or keep disabled the one or more functions of the wireless communications up detection of the trigger event, depending on the trigger event that was detected. The processor being configured to disable one or more functions of the wireless communications enables more accurate hardware control to be performed by the apparatus control threads by reducing a likelihood of the communications processing thread appropriating execution time of the processor from the control threads. Additionally, the trigger events in the first subgroup may relate to particular uses of the apparatus in which the communications are less likely to be needed. Accordingly, the power consumption of the apparatus can be reduced by pre-emptively disabling functions of the communications based on the particular trigger event that was detected.

The processor may be a processing unit or a CPU (e.g., a microcontroller) configured to execute computational tasks. The aerosol-generating apparatus may comprise a single processor core configured to execute the plurality of processing threads. The processor may therefore be a single-core processor. However, in other examples, the aerosol-generating apparatus may comprise a multi-core processor, wherein the single processor core is one of a plurality of processor cores configured to operate the apparatus.

The plurality of processing threads may be defined as a sequence of programmed instructions that can be managed independently by a thread scheduler of the processor. Accordingly, the processor core of the processor may be referred to as a multithreaded processor core. Each thread may be configured to perform a respective process formed by the sequence of programmed instructions. The one or more functions of the wireless communications which is disabled in response to detecting certain trigger events may be a process formed by a particular sequence of instructions. Accordingly, the communications processing thread may be configured to disable the one or more functions of the communications e.g., by abstaining from executing that particular sequence of instructions.

The plurality of processing threads may share processing resources of the processor such as memory (e.g., a cache) and file descriptors. The processor may be configured to execute each of the plurality of threads pseudo-simultaneously e.g., using multithreading techniques such as thread-level parallelism and/or instruction-level parallelism.

The communications processing thread may be for managing a wireless communications module. For example, the communications thread may be considered to provide a wireless communications connection with one or more peripheral devices. Accordingly, the communications thread may be for administering a wireless communications protocol (or standard), such as BLE as discussed below.

The plurality of trigger events may be user initiated events as discussed below including: an inhalation from the apparatus, a button press, insertion or removal of a consumable in/from the apparatus, connection or disconnection of a charging device, or any other suitable user event. The apparatus may comprise one or more sensors configured to detected each of the detectable trigger events and provide a signal to the processor, the signal indicating whether the respective trigger event had occurred.

Each of the plurality of threads may have an associated thread priority. For example, the thread priority of each thread may be an integer, e.g. in the range 1 to 10. A larger integer may correspond to a higher thread priority. The thread scheduler may use each thread priority to determine which thread should be allowed to execute first at any one time. Accordingly, the thread priority may be a scheduling priority.

The plurality of threads may be time-sliced. Therefore, higher priority threads may be permitted to demand part of the execution time which was originally assigned to the lower priority threads. The communications thread may be prioritised over the remaining threads by allocating time preferentially to the communications thread over the one or more apparatus control threads, e.g. by allocating it more time or by scheduling the communications thread more often.

The processor may be configured to execute the communications processing thread with a higher priority than the one or more apparatus control threads.

Accordingly, the thread scheduler of the processor may be configured to prioritise the communications processing thread over the one or more apparatus control threads. For example, if the processor is scheduled to execute an instruction from the communications processing thread at the same time as an instruction from the one or more apparatus control threads, then the processor may be configured to execute the instruction from the communications processing thread before executing the instruction from the one or more apparatus threads.

Operating a wireless communications stack typically requires tight control of the timing of processor operations. Therefore, by prioritising the communications processing thread over the one or more apparatus control threads, the communications processing thread may be less likely to be interrupted by the functions of other threads thereby increasing the reliability of the apparatus' communication capabilities.

The processor may be configured to execute the communications processing thread with a higher priority than the apparatus control threads when the apparatus is powered on (i.e., including when the one or more functions of the communications are disabled). However, even where this is the case, by disabling the one or more functions of the wireless communications upon detection of certain trigger events, the likelihood of the higher priority communications processing thread disrupting the one or more apparatus control threads can be reduced.

In some examples, the processor may be configured to disable execution of the communications processing thread upon detection of the trigger event from the first subgroup. Accordingly, in these examples, the communications processing thread may not be executed at all upon detection of the trigger event.

The present inventors have found that in aerosol-generating apparatuses with wireless communications, jitter may be observed in the control of the other apparatus functions, for example, the heating system, owing to interruptions by the communications processing thread operating the wireless communications. Therefore, the processor being configured to disable one or more functions of the wireless communications upon detecting certain conditions reduces the likelihood of the communications processing thread disrupting the apparatus control threads, e.g. by the processor being able to allocate more time to executing instructions associated with the hardware control instead of the communications. Accordingly, the processor may perform finer hardware control, for example during the heating session of the apparatus.

The communications processing thread may be permitted to disrupt the one or more apparatus control threads by appropriating the processing resource in preference to the one or more apparatus control threads (even during the heating session). Accordingly, by configuring the processing core to disable one or more functions of the wireless communications during the heating session, a likelihood of the communications processing thread appropriating the processing resource in this way may be reduced during the heating session. In other words, the communications processing thread may be less likely to interrupt the one or more apparatus threads during the heating session. In this context, interrupting may refer to an interrupt command being executed by the communication thread wherein the processor is requested to suspend currently executing code to execute an instruction of the communication thread, or interrupting may simply refer to an instruction of the communications processing thread being scheduled and executed by the processor before an instruction of the apparatus control threads is executed.

The first subgroup of trigger events may include one or more of: an inhalation from the apparatus, a consumable being inserted into the apparatus, and/or a charging device being received by a charging interface of the apparatus. Each of the trigger events may also be configured to wake up the apparatus from a sleep state as discussed below. Nevertheless, by being included in the first subgroup, the processor is configured to disable (or keep disabled) the one or more functions of the communications apparatus upon detection of one of these trigger events, irrespective of whether the apparatus is already awake or not.

The plurality of trigger events may comprise a second subgroup of trigger events, wherein the processor is configured to enable (or keep enabled) the one or more functions of the wireless communications upon detection of a trigger event from the second subgroup. Accordingly, the processor may enable the communications in anticipation of them being required.

The apparatus may include an actuator wherein the second subgroup of trigger events includes detecting an actuation of the actuator. For example, the actuator may be a switch, a button (wherein the actuation of the button is a button press), a touchscreen control switch, etc. Accordingly, the processor may be configured to enable (or keep enabled) the one of more functions of the communications upon detection of the actuator being actuated. The apparatus may also be configured to wake from a sleep state upon actuation of the actuator. For example, when the actuator is a wake switch, the apparatus may be configured to wake from a sleep state and the processor may be configured to enable the one or more functions of the communication upon actuation of the wake switch.

As mentioned above, the aerosol-generating apparatus may be configured to enter a sleep state. For example, the sleep state may be a state in which one or more components of the apparatus (e.g., the communications capabilities, the aerosol-generating unit, a user interface etc is disabled) are in a low power state (which may be understood as a state in which power consumption of the component is lower compared with when the apparatus is not in the sleep state). In some examples, the sleep state may be a power-off state wherein the apparatus is powered off entirely (and may be turned back on, e.g., using a button).

One or more of the trigger events may be a wake event and the apparatus may be configured to wake from the sleep state upon detection of a wake event. As mentioned above, each wake event may be included in the first subgroup of trigger events or the second subgroup of trigger events. Therefore, the processor may be configured to disable (or enable) the one or more functions of the communications upon waking of the apparatus, depending on the wake event that was detected.

As mentioned above, the one or more wake events may include one or more of: an inhalation from the apparatus, a consumable being inserted into the apparatus, a charging device being received by a charging interface of the apparatus and/or an actuator (e.g., a wake switch or a button) being actuated.

For example, when the trigger events include detection of a consumable being inserted into the apparatus, the apparatus may be configured to wake up in response to the detection of a consumable being inserted into the apparatus. The processor may be configured to disable (or keep disabled) the one or more functions of the wireless communications upon waking of the apparatus in response to detecting the trigger event of the consumable being inserted.

In a further example, the aerosol-generating apparatus may include a charging interface for receiving charge from a charging device (e.g., a charging cable or wireless charging device) and a charger detection unit configured to detect the presence of a charging device at the charging interface. The plurality of trigger events in the first subgroup may include the detection of the charging device at the charging interface (e.g., by detecting a charging device being inserted into a charging port of the apparatus). Therefore, the processor may be configured to disable (or keep disabled) the one or more functions of the wireless communications upon detection of the charging device at the charging interface. Further, the apparatus may be configured to wake from a sleep state upon detection of the charging device at the charging interface. If the apparatus wakes up in response to the charging device being detected at the charging interface, the processor may be configured to disable the one or more functions of the wireless communications (since wireless communications may be unlikely during charging).

In a further example, the aerosol-generating apparatus may further comprise an airflow sensor configured to detect an inhalation from the aerosol-generating apparatus. Accordingly, the plurality of trigger events may include an inhalation from the apparatus. The processor may be configured to disable (or keep disabled) the one or more functions of the wireless communications upon detection of the inhalation (which may be referred to as a puff).

Additionally, the detection of an inhalation may also form a wake event for waking the apparatus from the sleep state. If the apparatus wakes up in response to an inhalation being detected (e.g., when a user takes a puff of the apparatus) the processor may be configured to disable (or keep disabled) the one or more functions of the wireless communications upon detection of the inhalation. For example, the communications may be prevented from establishing a connection with a peripheral device upon waking, thereby reducing the chances of the apparatus control threads being disrupted by the communications processing thread during the heating session.

As mentioned above, the aerosol-generating apparatus may include an actuator (e.g., a button or a switch). A wake event for waking the apparatus from the sleep state may include detecting the actuator being actuated (e.g., the button being pressed, or the switch being switched). The processor may be configured to enable the one or more functions of the wireless communications upon detection of the actuator being actuated to wake up the apparatus.

The one or more apparatus control threads may be configured to begin a heating session of the apparatus upon detection of the inhalation (irrespective of whether the apparatus was in a sleep state or not). The processor may be configured to disable the one of more functions of the wireless communications during a heating session of the aerosol-generating apparatus. Accordingly, the plurality of trigger events may be considered to include the initiation of a heating session. Therefore, the processor may be configured to disable the one or more functions of the heating session upon detection of the inhalation.

The initiation of a heating session may cause the one or more functions of the communications to be disabled, irrespective of whether the apparatus was in a sleep state or not. Accordingly, an inhalation from the apparatus may be considered to be a trigger event and, optionally, a wake event.

Alternatively or additionally, the aerosol-generating apparatus may further comprise an actuator, and the one or more apparatus control threads (or more specifically the heater control thread) may be configured to begin a heating session in response to the actuator being actuated. Accordingly, a heating session may be initialised by the user by using the actuator (e.g., pressing a button) or by inhaling from the apparatus.

The aerosol-generating unit may comprise a heating system configured to heat the aerosol precursor during a heating session of the apparatus. The one or more apparatus control threads may include a heater control thread for controlling the heating system to heat the aerosol precursor during the heating session. Configuring of the processor to disable the one or more functions of the wireless communications during the heating session may reduce a likelihood of the communications processing thread disrupting the heater control thread during the heating session. Therefore, a temperature of the heating system may be controlled more precisely and reliably since the scheduling of the heater control thread is less likely to be delayed by the processor being apprehended to perform tasks related to the communications. By implementing the heater control more quickly and accurately, the temperature control of the aerosol precursor can be improved thereby providing a more consistent quality of aerosol.

The heating session (or heating cycle) of the apparatus may be defined as a period during which the heating system heats the aerosol precursor.

The heating session may end, for example, when an airflow sensor no longer detects airflow in the aerosol-generating apparatus and/or when a predetermined period of time has elapsed after the heating session commenced. In some examples, the heating session may end when the airflow has not been detected for a predetermined period of time. In some examples, a heating session may end when the aerosol precursor is exhausted. In some examples, the heating session may end when an actuator included in the apparatus is actuated (e.g., a power or sleep button), or when actuation of the actuator ceases.

In some examples (e.g. where the aerosol-generating apparatus is for use with a liquid aerosol precursor), a heating session may encompass only a single inhalation of a user using the apparatus (e.g. ending when airflow sensor no longer detects airflow in the aerosol-generating apparatus). In such examples, the apparatus may be configured to disable a power supply to the heater (i.e., turn the heating system off) between heating sessions (when the user is not inhaling using the apparatus), so that the heating system does not heat the aerosol precursor in-between inhalations. In such examples, the one or more functions of the communications may be enabled in-between heating sessions, i.e. between inhalations. Alternatively, the one or more functions of the communications may be disabled for a session including multiple inhalations using the apparatus. In this way, the communications may be less likely to disrupt the hardware control threads when a subsequent inhalation is taken using the apparatus.

In other examples (e.g. where the aerosol-generating apparatus is for use with a solid aerosol precursor), a heating session may encompass multiple inhalations of a user using the apparatus. In such examples, the heating system may be configured to continue heating the aerosol-precursor in-between inhalations within the heating session. For example, the heater control thread may be configured to operate the heating system at the first temperature for the duration of a heating session comprising multiple inhalations. In some examples, the processor may be configured to operate the heating system at a second, lower temperature after an inhalation (e.g. for a low temperature duration) so that the aerosol precursor is heated to at the second temperature between inhalations within a heating session. In such examples, the one or more functions of the communications may be disabled for a heating session which includes multiple inhalations from the device.

The heater control thread may be configured to operate the heating system at a first temperature during aerosol generation. The first temperature may be an aerosol target temperature for generating an aerosol from the aerosol precursor. For example, the apparatus may be configured to turn on a heater when a user inhales from the apparatus. The processor may be configured to disable one or more functions of the wireless communications when the heating system is operated at the first temperature.

The heater control thread may be configured to control the heating system by receiving one or more sample variables (e.g. a sample voltage, a sample current, a sample power consumption, or a sample temperature) relating to the heating system and adjusting a control signal to the heating system based on the one or more sample variables. In some examples, the heating system may comprise a resistive heating element wherein an electrical resistance of the heating element, and hence the power consumption of the resistive heating element is dependent on the temperature of the heating element. In some examples, the heater control thread may be configured to receive one or more sample variables indicative of a power consumption of the resistive heating element (e.g. obtained using one or more sensors of the heating system) and adjust a control signal to the heating system, e.g. so as to repeatedly enable and/or disable the power supply (e.g. using PWM) so as to maintain the heating system at a target power consumption. In other examples, the heater control thread may be configured to receive a temperature (e.g. obtained using one or more sensors of the heating system) and adjust a control signal to the heating system based on the temperature, e.g. so as to repeatedly enable and/or disable the power supply (e.g. using PWM) so as to maintain the heating system at a target temperature. Other control methodologies are possible, as would be appreciated by a skilled person.

In some examples, the heater control thread may be configured to update the control signal at least every 20ms, more preferably at least every 5ms, more preferably at least every 2ms, more preferably at least every 1ms. More specifically, the heater control thread may be configured to update the control signal at these rates during a heating session. This timing may not be achievable reliably during a heating system in traditional aerosol-generating apparatuses with wireless communications because the one or more apparatus control threads may be disrupted by the communications during the heating session. However, by disabling the one or more functions of the communications, the heater control thread may be able to update at these rates without experiencing disruptive timing jitter and providing more reliable and fine temperature control of the heating system. In this context, "updating" the control signal may be considered to mean analysing and determining a value for the control signal and so may include maintaining the control signal at a previous value or changing the control signal to a different value.

The aerosol-generating apparatus may be configured to communicate with a peripheral device via a communications. For example, the peripheral device may be a mobile device (e.g. mobile phone) or an external computer. The communications may include: e.g., Wi-Fi, Bluetooth^{™}, or Bluetooth^{™} Low Energy (BLE). For example, the apparatus may be configured to use the wireless communications capability to exchange data with the peripheral device such as usage data of the apparatus, apparatus settings and/or age verification information.

The one or more functions of the wireless communications disabled by the processor upon detection of a trigger event in the first subgroup or during a heating session may include one or more of: advertising of the aerosol-generating apparatus for establishing a connection with a peripheral device, transmitting of data to a peripheral device, receiving data from a peripheral device, forming a connection with a peripheral device, etc.

In other examples, the wireless communications may be disabled entirely upon detection of a trigger event in the first subgroup or during a heating session of the apparatus (i.e. all of the one or more functions of the wireless communications may be disabled). For example, the communications processing thread itself may be disabled from executing on the processor during the heating session. In some examples, a wireless communications module (e.g., a BLE chip) for performing the wireless communications may be powered off or instructed to enter a sleep state during the heating session.

The communications may include short-range or near-field communications. For example, the communications may include BLE. The aerosol generation apparatus may be configured to communicate (e.g. pair) with a peripheral device via BLE.

The one or more functions of the wireless communications disabled by the processor may include BLE advertising of the aerosol-generating apparatus for establishing a connection with a peripheral device (i.e., wherein the aerosol-generating apparatus is configured to broadcast packets to devices in proximity to the aerosol-generating apparatus for the purpose of establishing a wireless connection with such devices). In other examples, any BLE function or functions related to broadcasting or receiving data via BLE may be disabled during the heating session.

The communications processing thread may be configured to perform a data dump in which data stored on the aerosol-generating unit is transmitted to the peripheral device by transmitting multiple data (e.g., BLE) packets. For example, data dump may include transmitting a preparation packet to the peripheral device followed by a continuous data transfer of a large quantity of data, e.g., comprising multiple packets. The ability to perform the data dump may be useful, for example, to periodically communicate usage data about how the aerosol-generating apparatus has been used to the peripheral device.

The processor may be configured to prevent the aerosol-generating unit from generating the aerosol during the data dump. For example, the processor (e.g. a heating control thread running on the processor) may be configured to prevent the provision of power to the heating system (e.g. by prohibiting the initiation of a heating session) during a data dump, thereby reducing a likelihood of the one or apparatus control threads being disrupted and competing for processing resource during the data dump. This can help to ensure that enough processing resource is available to the communication threads during the data dump, and may extend the battery life of the apparatus between charges by preventing aerosol generation and data dumps from being performed at the same time.

Accordingly, the initiation of a data dump may be considered to be one of the plurality of trigger events in a third subgroup, wherein the processor is configured to disable aerosol generation by the apparatus upon detection of a trigger event in the third subgroup.

For example, the communications processing thread may be configured to set a flag in a shared memory of the processing threads during the data dump. One or more of the apparatus control threads may be configured to disable the aerosol-generating unit from generating the aerosol upon determining that the flag is set.

The aerosol-generating apparatus may further comprise a visual indicator, e.g. including one or more LEDs, for indicating if aerosol generation is disabled. One or more of the apparatus control threads may be configured to provide a visual indication using the visual indicator during the data dump for indicating that the aerosol-generating unit is disabled from generating the aerosol (e.g. if the visual indicator includes one or more LEDs, one or more LEDs may be configured to turn on, or flash on, and off). For example, when the communications processing thread is configured to set a flag during the data dump, one or more of the apparatus control threads may be configured to disable the aerosol-generating unit from generating the aerosol and provide the visual indication using the visual indicator upon determining that the flag is set.

The one or more apparatus control threads may include one or more threads for controlling respective hardware functions of the aerosol-generating apparatus. For example, the respective hardware functions may include one or more of: heating system control; LED status control; battery charging control; and button monitoring. For example, a thread configured to control LED status may be configured to cause one or more LEDs to fade off and/or on. Button monitoring threads may be configured to repeatedly determine whether a button or switch has been actuated and trigger a function of the device accordingly.

The aerosol-generating apparatus may include a device body, and a consumable comprising an aerosol precursor, wherein the device body is configured to receive the consumable. The aerosol-generating unit may be included in the consumable.

In a second aspect of the present invention there is provided a method of controlling an aerosol-generating apparatus, the aerosol-generating apparatus comprising:
an aerosol-generating unit configured to generate an aerosol from an aerosol precursor, and
a processor configured to execute a plurality of processing threads for operating the aerosol-generating apparatus, the plurality of processing threads includes a communications processing thread for operating wireless communications, and one or more apparatus control threads for controlling the aerosol-generating unit;
wherein the method comprises:
   detecting one of a plurality of trigger events, the plurality of trigger events comprising a first subgroup of trigger events; and
   if the detected trigger event is in the first subgroup, disabling one or more functions of the wireless communications.

A particular example of the present invention may relate specifically to the disabling of the one or more functions of the communications during a heating session (for example, when the first subgroup of the trigger events includes the initialisation of a heating session). Therefore, in a third aspect of the present invention, there is provided an aerosol-generating apparatus comprising:
an aerosol-generating unit configured to generate an aerosol from an aerosol precursor, and
a processor configured to execute a plurality of processing threads for operating the aerosol-generating apparatus, the plurality of processing threads including a communications processing thread for operating wireless communications , and one or more apparatus control threads for controlling the aerosol-generating unit;
the processor is further configured to execute the communications processing thread at a higher priority than the one or more apparatus control threads; and
the processor is further configured to disable one or more functions of the wireless communications during a heating session of the aerosol-generating apparatus.

By the processor being configured to disable one or more functions of the wireless communications operated by the communications processing thread during a heating session of the apparatus, a likelihood of the higher priority communications processing thread disrupting the one or more apparatus control threads can be reduced during the heating session. In this way, the present invention can be viewed as helping to provide more accurate control of the apparatus to be performed during heating sessions (e.g., during a vaping session) by ensuring that the (higher priority) communications is less likely to appropriate processing resource during the heating session.

In a fourth aspect, there is provided a method of controlling an aerosol-generating apparatus, the aerosol-generating apparatus comprising:
an aerosol-generating unit configured to generate an aerosol from an aerosol precursor, and
a processor configured to execute a plurality of processing threads for operating the aerosol-generating apparatus, the plurality of processing threads includes a communications processing thread for administering a wireless communications, and one or more apparatus control threads for controlling the aerosol-generating unit;
the processor is further configured to prioritise the communications processing thread over the apparatus control threads;
wherein the method comprises:
   disabling one or more functions of the wireless communications during a heating session of the aerosol-generating apparatus.

The method may further comprise providing and/or executing each of the plurality of processing threads.

For the avoidance of doubt, the method of the fourth aspect may include any of the optional features discussed herein (or method steps corresponding to such features), e.g. as discussed above in relation to the first aspect.

The present disclosure may provide a computer program configured to cause an aerosol-generating apparatus/system to perform any method or method step disclosed herein. A computer-readable medium comprising the computer program is also disclosed.

In a fifth aspect there is provided a system comprising the aerosol generation apparatus of the first or third aspects and a peripheral device, wherein the aerosol-generating apparatus and the peripheral device are configured to communicate with each other using a wireless communications.

The preceding summary is provided for purposes of summarizing some examples to provide a basic understanding of aspects of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features, aspects, and advantages of the subject matter described herein will become apparent from the following text and the accompanying drawings.

### BRIEF DESCRIPTION OF THE FIGURES

Aspects, features and advantages of the present disclosure will become apparent from the following description of examples in reference to the appended drawings in which like numerals denote like elements.
**Fig. 1** is a block system diagram showing an example aerosol-generating apparatus.
**Fig. 2** is a block system diagram showing an example implementation of the apparatus of Fig. 1, where the aerosol-generating apparatus is configured to generate aerosol from a liquid precursor.
**Figs. 3A and 3B** are schematic diagrams showing an example implementation of the apparatus of Fig. 2.
**Fig. 4** is a block system diagram showing an example implementation of the apparatus of Fig. 1, where the aerosol-generating apparatus is configured to generate aerosol from a solid precursor.
**Fig. 5** is a schematic diagram showing an example implementation of the apparatus of Fig. 4.
**Fig. 6** is a block system diagram showing an example system for managing an aerosol-generating apparatus.
**Fig. 7** is a block system diagram of an aerosol-generating apparatus according to aspects of the invention;
**Fig. 8** is a block system diagram of an aerosol-generating apparatus according to aspects of the invention;
**Fig. 9** is a flowchart of a method for controlling an aerosol-generating apparatus; and
**Fig. 10** is a flowchart of another method for controlling an aerosol-generating apparatus.

### DETAILED DESCRIPTION OF EMBODIMENTS

Before describing several examples implementing the present disclosure, it is to be understood that the present disclosure is not limited by specific construction details or process steps set forth in the following description and accompanying drawings. Rather, it will be apparent to those skilled in the art having the benefit of the present disclosure that the systems, apparatuses and/or methods described herein could be embodied differently and/or be practised or carried out in various alternative ways.

Unless otherwise defined herein, scientific and technical terms used in connection with the presently disclosed inventive concept(s) shall have the meanings that are commonly understood by those of ordinary skill in the art, and known techniques and procedures may be performed according to conventional methods well known in the art and as described in various general and more specific references that may be cited and discussed in the present specification.

Any patents, published patent applications, and non-patent publications mentioned in the specification are hereby incorporated by reference in their entirety.

All examples implementing the present disclosure can be made and executed without undue experimentation in light of the present disclosure. While particular examples have been described, it will be apparent to those of skill in the art that variations may be applied to the systems, apparatus, and/or methods and in the steps or in the sequence of steps of the methods described herein without departing from the concept, spirit, and scope of the inventive concept(s). All such similar substitutions and modifications apparent to those skilled in the art are deemed to be within the spirit, scope, and concept of the inventive concept(s) as defined by the appended claims.

The use of the term "a" or "an" in the claims and/or the specification may mean "one," as well as "one or more," "at least one," and "one or more than one." As such, the terms "a," "an," and "the," as well as all singular terms, include plural referents unless the context clearly indicates otherwise. Likewise, plural terms shall include the singular unless otherwise required by context.

The use of the term "or" in the present disclosure (including the claims) is used to mean an inclusive "and/or" unless explicitly indicated to refer to alternatives only or unless the alternatives are mutually exclusive. For example, a condition "A or B" is satisfied by any of the following: A is true (or present), and B is false (or not present), A is false (or not present) and B is true (or present), and both A and B are true (or present).

As used in this specification and claim(s), the words "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless otherwise explicitly stated as incompatible, or the physics or otherwise of the embodiments, examples, or claims prevent such a combination, the features of examples disclosed herein, and of the claims, may be integrated together in any suitable arrangement, especially ones where there is a beneficial effect in doing so. This is not limited to only any specified benefit and instead may arise from an "ex post facto" benefit. This is to say that the combination of features is not limited by the described forms, particularly the form (e.g. numbering) of example(s), embodiment(s), or dependency of claim(s). Moreover, this also applies to the phrase "in one embodiment," "according to an embodiment," and the like, which are merely a stylistic form of wording and are not to be construed as limiting the following features to a separate embodiment to all other instances of the same or similar wording. This is to say, a reference to `an,' 'one,' or 'some' embodiment(s) may be a reference to any one or more, and/or all embodiments, or combination(s) thereof, disclosed. Also, similarly, the reference to "the" embodiment may not be limited to the immediately preceding embodiment. Further, all references to one or more embodiments or examples are to be construed as non-limiting to the claims.

The present disclosure may be better understood in view of the following explanations, wherein the terms used that are separated by "or" may be used interchangeably:
As used herein, an **"aerosol-generating apparatus"** (or **"electronic(e)-cigarette"**) may be an apparatus configured to deliver an aerosol to a user for inhalation by the user. The apparatus may additionally/alternatively be referred to as a "smoking substitute apparatus", if it is intended to be used instead of a conventional combustible smoking article. As used herein a combustible "smoking article" may refer to a cigarette, cigar, pipe or other article, that produces smoke (an aerosol comprising solid particulates and gas) via heating above the thermal decomposition temperature (typically by combustion and/or pyrolysis). An aerosol generated by the apparatus may comprise an aerosol with particle sizes of 0.2 - 7 microns, or less than 10 microns, or less than 7 microns. This particle size may be achieved by control of one or more of: heater temperature; cooling rate as the vapour condenses to an aerosol; flow properties including turbulence and velocity. The generation of aerosol by the aerosol-generating apparatus may be controlled by an input device. The input device may be configured to be user-activated, and may for example include or take the form of an actuator (e.g. actuation button) and/or an airflow sensor.

Each occurrence of the aerosol-generating apparatus being caused to generate aerosol for a period of time (which may be variable) may be referred to as an **"activation"** of the aerosol-generating apparatus. The aerosol-generating apparatus may be arranged to allow an amount of aerosol delivered to a user to be varied per activation (as opposed to delivering a fixed dose of aerosol), e.g. by activating an aerosol-generating unit of the apparatus for a variable amount of time, e.g. based on the strength/duration of a draw of a user through a flow path of the apparatus (to replicate an effect of smoking a conventional combustible smoking article).

The aerosol-generating apparatus may be portable. As used herein, the term **"portable"** may refer to the apparatus being for use when held by a user.

As used herein, an **"aerosol-generating system"** may be a system that includes an aerosol-generating apparatus and optionally other circuitry/components associated with the function of the apparatus, e.g. one or more external devices and/or one or more external components (here "external" is intended to mean external to the aerosol-generating apparatus). As used herein, an "external device" and "external component" may include one or more of a: a charging device, a mobile device (which may be connected to the aerosol-generating apparatus, e.g. via a wireless or wired connection); a networked-based computer (e.g. a remote server); a cloud-based computer; any other server system.

An example aerosol-generating system may be a system for managing an aerosol-generating apparatus. Such a system may include, for example, a mobile device, a network server, as well as the aerosol-generating apparatus.

As used herein, an **"aerosol"** may include a suspension of precursor, including as one or more of: solid particles; liquid droplets; gas. Said suspension may be in a gas including air. An aerosol herein may generally refer to/include a vapour. An aerosol may include one or more components of the precursor.

As used herein, a **"precursor"** may include one or more of a: liquid; solid; gel; loose leaf material; other substance. The precursor may be processed by an aerosol-generating unit of an aerosol-generating apparatus to generate an aerosol. The precursor may include one or more of: an active component; a carrier; a flavouring. The active component may include one or more of nicotine; caffeine; a cannabidiol oil; a non-pharmaceutical formulation, e.g. a formulation which is not for treatment of a disease or physiological malfunction of the human body. The active component may be carried by the carrier, which may be a liquid, including propylene glycol and/or glycerine. The term "flavouring" may refer to a component that provides a taste and/or a smell to the user. The flavouring may include one or more of: Ethylvanillin (vanilla); menthol, Isoamyl acetate (banana oil); or other. The precursor may include a substrate, e.g. reconstituted tobacco to carry one or more of the active component; a carrier; a flavouring.

As used herein, a **"storage portion"** may be a portion of the apparatus adapted to store the precursor. It may be implemented as fluid-holding reservoir or carrier for solid material depending on the implementation of the precursor as defined above.

As used herein, a **"flow path"** may refer to a path or enclosed passageway through an aerosol-generating apparatus, e.g. for delivery of an aerosol to a user. The flow path may be arranged to receive aerosol from an aerosol-generating unit. When referring to the flow path, upstream and downstream may be defined in respect of a direction of flow in the flow path, e.g. with an outlet being downstream of an inlet.

As used herein, a **"delivery system"** may be a system operative to deliver an aerosol to a user. The delivery system may include a mouthpiece and a flow path.

As used herein, a **"flow"** may refer to a flow in a flow path. A flow may include aerosol generated from the precursor. The flow may include air, which may be induced into the flow path via a puff by a user.

As used herein, a **"puff"** (or **"inhale"** or **"draw"**) by a user may refer to expansion of lungs and/or oral cavity of a user to create a pressure reduction that induces flow through the flow path.

As used herein, an **"aerosol-generating unit"** may refer to a device configured to generate an aerosol from a precursor. The aerosol-generating unit may include a unit to generate a vapour directly from the precursor (e.g. a heating system or other system) or an aerosol directly from the precursor (e.g. an atomiser including an ultrasonic system, a flow expansion system operative to carry droplets of the precursor in the flow without using electrical energy or other system). A plurality of aerosol-generating units to generate a plurality of aerosols (for example, from a plurality of different aerosol precursors) may be present in an aerosol-generating apparatus.

As used herein, a **"heating system"** may refer to an arrangement of at least one heating element, which is operable to aerosolise a precursor once heated. The at least one heating element may be electrically resistive to produce heat from the flow of electrical current therethrough. The at least one heating element may be arranged as a susceptor to produce heat when penetrated by an alternating magnetic field. The heating system may be configured to heat a precursor to below 300 or 350 degrees C, including without combustion.

As used herein, a **"consumable"** may refer to a unit that includes a precursor. The consumable may include an aerosol-generating unit, e.g. it may be arranged as a cartomizer. The consumable may include a mouthpiece. The consumable may include an information carrying medium. With liquid or gel implementations of the precursor, e.g. an e-liquid, the consumable may be referred to as a "capsule" or a "pod" or an "e-liquid consumable". The capsule/pod may include a storage portion, e.g. a reservoir or tank, for storage of the precursor. With solid material implementations of the precursor, e.g. tobacco or reconstituted tobacco formulation, the consumable may be referred to as a "stick" or "package" or "heat-not-burn consumable". In a heat-not-burn consumable, the mouthpiece may be implemented as a filter and the consumable may be arranged to carry the precursor. The consumable may be implemented as a dosage or pre-portioned amount of material, including a loose-leaf product.

As used herein **"heat-not-burn"** (or **"HNB"** or **"heated precursor"**) may refer to the heating of a precursor, typically tobacco, without combustion, or without substantial combustion (i.e. localised combustion may be experienced of limited portions of the precursor, including of less than 5% of the total volume).

As used herein, a **"processing resource"** (or **"processor"** or **"controller"**) may refer to one or more units for processing data, examples of which may include a microcontroller, FPGA, microprocessor, or other suitable component. A processing resource may be configured to execute a computer program, e.g. which may take the form of machine readable instructions, which may be stored on a non-transitory memory and/or programmable logic. The processing resource may have various arrangements corresponding to those discussed for the circuitry, e.g. on-board and/or off board the apparatus as part of the system. As used herein, any machine executable instructions, or computer readable media, may be configured to cause a disclosed method to be carried out, e.g. by an aerosol-generating apparatus or system as disclosed herein, and may therefore be used synonymously with the term method.

A **"processor"** or **"processor core"** of a processor may refer to a CPU configured to perform computational tasks. For example, the processor core may be a single processing unit included in a microprocessor on a single integrated circuit. For example, the microprocessor may be a single or multi-core processor with one or more separate processing units (cores) each of which reads and executes program instructions.

For example, a processing resource may include an FPGA. One or more processor cores (or "softcore processors") may be implemented on the FPGA using an HDL language.

As used herein, an **"external device"** (or **"peripheral device"**) may include one or more electronic components external to an aerosol-generating apparatus. Those components may be arranged at the same location as the aerosol-generating apparatus or remote from the apparatus. An external device may comprise electronic computer devices including: a smartphone; a PDA; a video game controller; a tablet; a laptop; or other like device.

As used herein, a **"computer readable medium/media"** (or **"memory"** or **"data storage"**) may include any medium capable of storing a computer program, and may take the form of any conventional non-transitory memory, for example one or more of: random access memory (RAM); a CD; a hard drive; a solid state drive; a memory card; a DVD. The memory may have various arrangements corresponding to those discussed for the circuitry /processor. The present disclosure includes a computer readable medium configured to cause an apparatus or system disclosed herein to perform a method as disclosed herein.

As used herein, a **"communication resource"** (or **"communication interface"**) may refer to hardware and/or firmware for electronic information/data transfer. The communication resource may be configured for wired communication ("wired communication resources") or wireless communication ("wireless communication resource"). Wireless communication resources may include hardware to transmit and receive signals by radio and may include various protocol implementations e.g. the 802.11 standard described in the Institute of Electronics Engineers (IEEE), Bluetooth^{™} from the Bluetooth Special Interest Group of Kirkland Wash, and Bluetooth Low Energy (BLE) from the Bluetooth Special Interest Group. Wired communication resources may include; Universal Serial Bus (USB); High-Definition Multimedia Interface (HDMI) or other protocol implementations. The apparatus may include communication resources for wired or wireless communication with an external device.

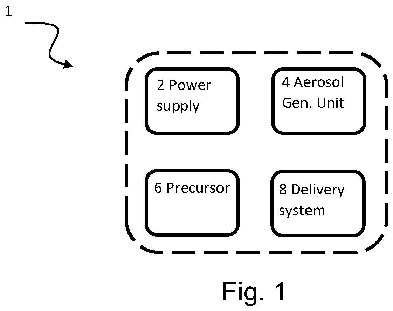

Referring to Fig. 1, an example aerosol-generating apparatus 1 includes a power supply 2, for the supply of electrical energy. The apparatus 1 includes an aerosol-generating unit 4 that is driven by the power supply 2. The power supply 2 may include an electric power supply in the form of a battery and/or an electrical connection to an external power source. The apparatus 1 includes a precursor 6, which in use is aerosolised by the aerosol-generating unit 4 to generate an aerosol. The apparatus 2 includes a delivery system 8 for delivery of the aerosol to a user.

Electrical circuitry (not shown in figure 1) may be implemented to control the interoperability of the power supply 4 and aerosol-generating unit 6.

In variant examples, which are not illustrated, the power supply 2 may be omitted since, e.g. an aerosol-generating unit implemented as an atomiser with flow expansion may not require a power supply.

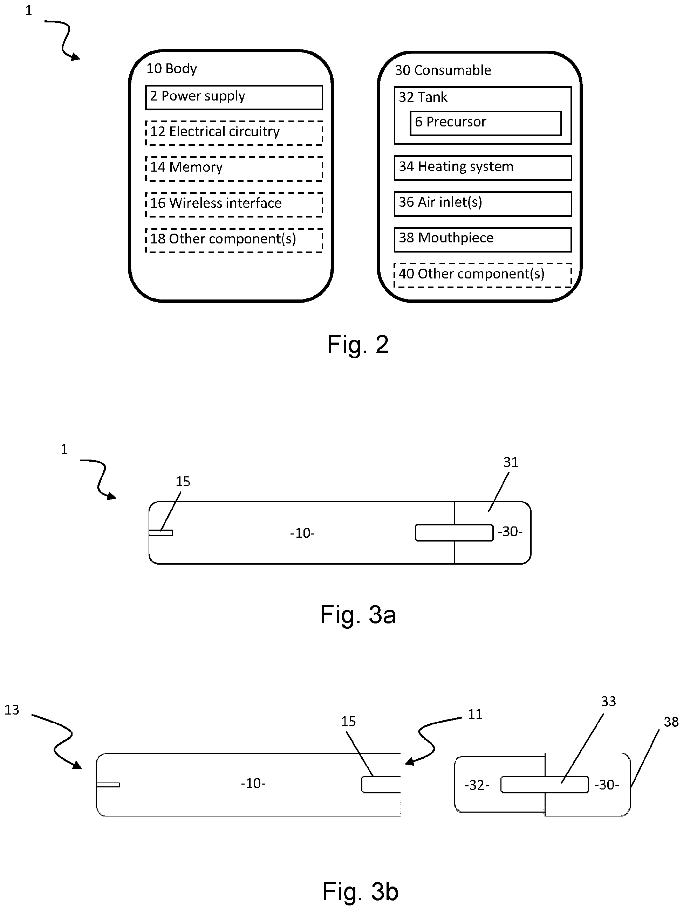

Fig. 2 shows an implementation of the apparatus 1 of Fig. 1, where the aerosol-generating apparatus 1 is configured to generate aerosol from a liquid precursor.

In this example, the apparatus 1 includes a device body 10 and a consumable 30.

In this example, the body 10 includes the power supply 4. The body may additionally include any one or more of electrical circuitry 12, a memory 14, a wireless interface 16, one or more other components 18.

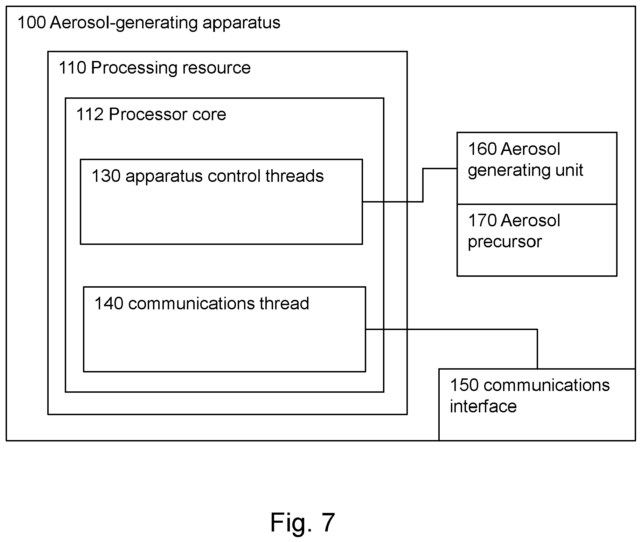

The electrical circuitry 12 includes a processor for controlling one or more operations of the body 10 and consumable 30, e.g. based on instructions stored in the memory 14. The processor is described in more detail below in relation to Fig. 7.

The wireless interface 16 is configured to communicate wirelessly with an external (e.g. mobile) device, e.g. via BLE.

The other component(s) 18 may include one or more user interface devices configured to convey information to a user and/or a charging port, for example (see e.g. Fig. 3).

The consumable 30 includes a storage portion implemented here as a tank 32 which stores the liquid precursor 6 (e.g. e-liquid). The consumable 30 also includes a heating system 34, one or more air inlets 36, and a mouthpiece 38. The consumable 30 may include one or more other components 40.

The body 10 and consumable 30 may each include a respective electrical interface (not shown) to provide an electrical connection between one or more components of the body 10 with one or more components of the consumable 30. In this way, electrical power can be supplied to components (e.g. the heating system 34) of the consumable 30, without the consumable 30 needing to have its own power supply.

In use, a user may activate the aerosol-generating apparatus 1 when inhaling through the mouthpiece 38, i.e. when performing a puff. The puff, performed by the user, may initiate a flow through a flow path in the consumable 30 which extends from the air inlet(s) 34 to the mouthpiece 38 via a region in proximity to the heating system 34.

Activation of the aerosol-generating apparatus 1 may be initiated, for example, by an airflow sensor in the body 10 which detects airflow in the aerosol-generating apparatus 1 (e.g. caused by a user inhaling through the mouthpiece), or by actuation of an actuator included in the body 10. Upon activation, the electrical circuitry 12 (e.g. under control of the processor) may supply electrical energy from the power supply 2 to the heating system 34 which may cause the heating system 32 to heat liquid precursor 6 drawn from the tank to produce an aerosol which is carried by the flow out of the mouthpiece 38.

When the apparatus 1 has finished producing the aerosol, the heating system 32 may be disabled so that the liquid precursor 6 is no longer being heated. In this context, the period during which the heating system 32 is configured to heat the liquid precursor 6 may be referred to as a heating session of the apparatus 1. A heating session may end, for example, when the airflow sensor no longer detects airflow in the aerosol-generating apparatus 1 and/or when a predetermined period of time has elapsed after the heating session has commenced. In another example, a heating session may end when the liquid precursor 6 in the tank is exhausted. In yet another example, a heating session may end when an actuator included in the body 10 is actuated (e.g., a power or sleep button).

In some examples, the heating system 34 may include a heating filament and a wick, wherein a first portion of the wick extends into the tank 32 in order to draw liquid precursor 6 out from the tank 32, wherein the heating filament coils around a second portion of the wick located outside the tank 32. The heating filament may be configured to heat up the liquid precursor 6 drawn out of the tank 32 by the wick to produce the aerosol.

In this example, the aerosol-generating unit 4 is provided by the above-described heating system 34 and the delivery system 8 is provided by the above-described flow path and mouthpiece 38.

In variant embodiments (not shown), any one or more of the precursor 6, heating system 34, air inlet(s) 36 and mouthpiece 38, may be included in the body 10. For example, the mouthpiece 36 may be included in the body 10 with the precursor 6 and heating system 32 arranged as a separable cartomizer.

Figs. 3A and 3B show an example implementation of the aerosol-generating apparatus 1 of Fig. 2. In this example, the consumable 30 is implemented as a capsule/pod, which is shown in Fig. 3A as being physically coupled to the body 10, and is shown in Fig. 3B as being decoupled from the body 10.

In this example, the body 10 and the consumable 30 are configured to be physically coupled together by pushing the consumable 30 into an aperture in a top end 11 the body 10, with the consumable 30 being retained in the aperture via an interference fit.

In other examples (not shown), the body 10 and the consumable 30 could be physically coupled together in other ways, e.g. by screwing one onto the other, through a bayonet fitting, or through a snap engagement mechanism, for example.

The body 10 also includes a charging port (not shown) at a bottom end 13 of the body 10.

The body 10 also includes a user interface device configured to convey information to a user. Here, the user interface device is implemented as a light 15, which may e.g. be configured to illuminate when the apparatus 1 is activated. The light 15 may be provided by an LED. Other user interface devices are possible, e.g. to convey information haptically or audibly to a user.

In this example, the consumable 30 has an opaque cap 31, a translucent tank 32 and a translucent window 33. When the consumable 30 is physically coupled to the body 10 as shown in Fig. 3A, only the cap 31 and window 33 can be seen, with the tank 32 being obscured from view by the body 10. The body 10 includes a slot 15 to accommodate the window 33. The window 33 is configured to allow the amount of liquid precursor 6 in the tank 32 to be visually assessed, even when the consumable 30 is physically coupled to the body 10.

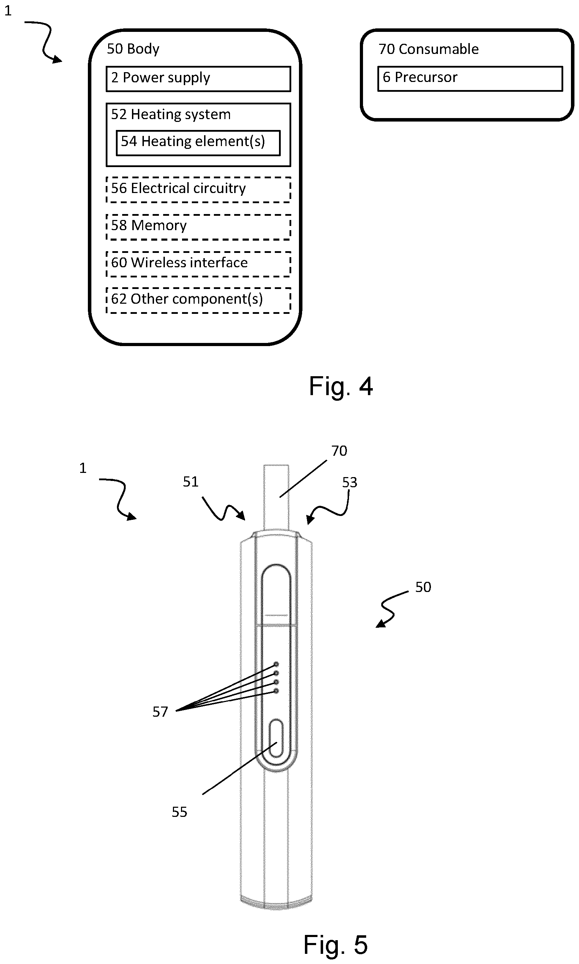

Fig. 4 shows an implementation of the apparatus 1 of Fig. 1, where the aerosol-generating apparatus 1 is configured to generate aerosol by a-heat not-burn process.

In this example, the apparatus 1 includes a device body 50 and a consumable 70.

In this example, the body 50 includes the power supply 4 and a heating system 52. The heating system 54 includes at least one heating element 54. The body may additionally include any one or more of electrical circuitry 56, a memory 58, a wireless interface 60, one or more other components 62.

The electrical circuitry 56 includes a processor for controlling one or more operations of the body 50, e.g. based on instructions stored in the memory 58.

The wireless interface 60 is configured to communicate wirelessly with an external (e.g. mobile) device, e.g. via BLE.

The other component(s) 62 may include an actuator, one or more user interface devices configured to convey information to a user and/or a charging port, for example (see e.g. Fig. 5).

The body 50 is configured to engage with the consumable 70 such that the at least one heating element 54 of the heating system 52 penetrates into the solid precursor 6 of the consumable. In use, a user may activate the aerosol-generating apparatus 1 to cause the heating system 52 of the body 50 to cause the at least one heating element 54 to heat the solid precursor 6 of the consumable (without combusting it) by conductive heat transfer, to generate an aerosol which is inhaled by the user.

Fig. 5 shows an example implementation of the aerosol-generating apparatus 1 of Fig. 4.

As depicted in Fig. 5, the consumable 70 is implemented as a stick, which is engaged with the body 50 by inserting the stick into an aperture at a top end 53 of the body 50, which causes the at least one heating element 54 of the heating system 52 to penetrate into the solid precursor 6.

The consumable 70 includes the solid precursor 6 proximal to the body 50, and a filter distal to the body 50. The filter serves as the mouthpiece of the consumable 70 and thus the apparatus 1 as a whole. The solid precursor 6 may be a reconstituted tobacco formulation.

In this example, the at least one heating element 54 is a rod-shaped element with a circular transverse profile. Other heating element shapes are possible, e.g., the at least one heating element may be blade-shaped (with a rectangular transverse profile) or tube-shaped (e.g. with a hollow transverse profile).

In this example, the body 50 includes a cap 51. In use the cap 51 is engaged at a top end 53 of the body 50. Although not apparent from Fig. 5, the cap 51 is moveable relative to the body 50. In particular, the cap 51 is slidable and can slide along a longitudinal axis of the body 50.

The body 50 also includes an actuator 55 on an outer surface of the body 50. In this example, the actuator 55 has the form of a button.

The body 50 also includes a user interface device configured to convey information to a user. Here, the user interface device is implemented as a plurality of lights 57, which may e.g. be configured to illuminate when the apparatus 1 is activated and/or to indicate a charging state of the power supply 4. Other user interface devices are possible, e.g. to convey information haptically or audibly to a user.

The body may also include an airflow sensor which detects airflow in the aerosol-generating apparatus 1 (e.g. caused by a user inhaling through the consumable 70). This may be used to count puffs, for example.

In this example, the consumable 70 includes a flow path which transmits aerosol generated by the at least one heating element 54 to the mouthpiece of the consumable.

In this example, the aerosol-generating unit 4 is provided by the above-described heating system 52 and the delivery system 8 is provided by the above-described flow path and mouthpiece of the consumable 70.

Activation of the aerosol-generating apparatus 1 may be initiated, for example, by an airflow sensor in the body 50 which detects airflow in the aerosol-generating apparatus 1 (e.g. caused by a user inhaling through the mouthpiece), or by actuation of an actuator included in the body 50. Upon activation, the electrical circuitry 56 (e.g. under control of the processor) may supply electrical energy from the power supply 2 to the heating system 54 which may cause the heating system 52 to heat the solid precursor 6 to produce an aerosol which is carried by the flow out of the mouthpiece 38.

In this example, the heating system 54 may be configured to continue heating the solid precursor 6 in-between inhalations (i.e., puffs on the device by the user) so that the precursor 6 is maintained at a temperature suitable for producing an aerosol in preparation for the next inhalation. In some examples, the heating system 54 may be configured heat the precursor 6 to an intermediate temperature between inhalations which is lower than the aerosolising temperature.

The time during which the heating system 54 heats the solid precursor 6 may be referred to as a heating session or a heating cycle. A heating session may end, for example, when the airflow sensor has not detected an inhalation for a predetermined period of time. In another example, a heating session may end when the solid precursor 6 is determined to be exhausted (e.g., by counting a number of puffs form the apparatus). In yet another example, a heating session may end when an actuator included in the body 10 is actuated (e.g., a power or sleep button).

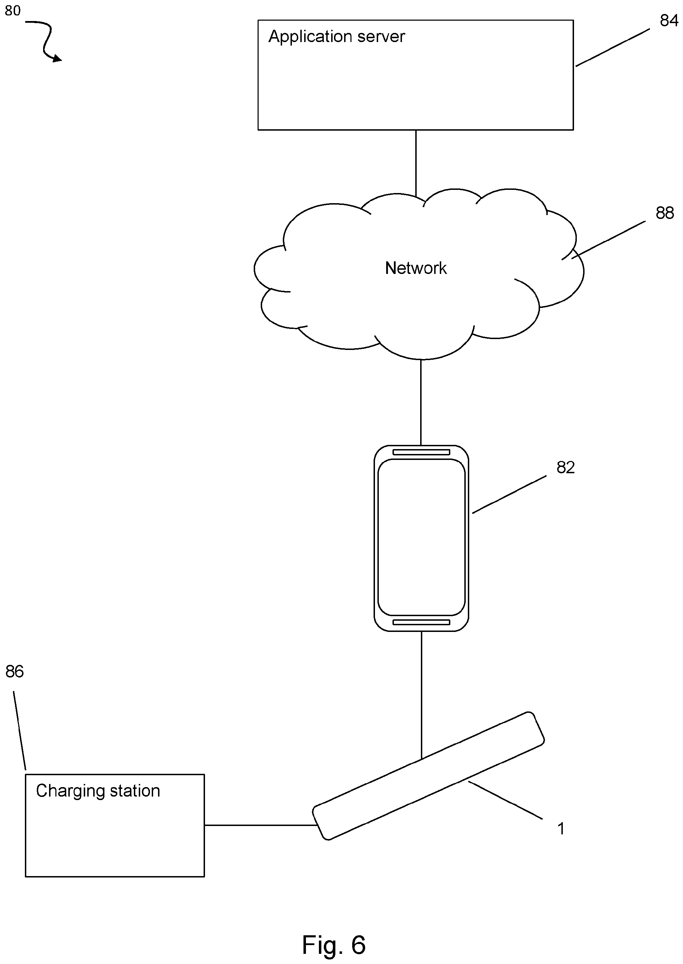

Fig. 6 shows an example system 80 for managing an aerosol-generating apparatus 1, such as those described above with reference to any of Figs. 1-5.

The system 80 as shown in Fig. 6 includes a mobile device 82, an application server 84, an optional charging station 86, as well as the aerosol-generating apparatus 1.

In this example, aerosol-generating apparatus 1 is configured to communicate wirelessly, e.g. via BLE, with an application (or "app") installed on the mobile device 2 (or a webapp configured to be accessed by the mobile device), via a wireless interface included in the aerosol-generating apparatus 1 and via a wireless interface included in the mobile device 82. The mobile device 82 may be a mobile phone, for example. The application on the mobile phone (or web app in communication with the mobile phone) is configured to communicate with the application server 84, via a network 88. The application server 84 may utilise cloud storage, for example.

The network 88 may include a cellular network and/or the internet.

In other examples, the aerosol-generating apparatus 1 may be configured to communicate with the application server 84 via a connection that does not involve the mobile device 82, e.g. via a narrowband internet of things ("NB-loT") or satellite connection. In some examples, the mobile device 82 may be omitted from the system 80.

A skilled person would readily appreciate that the mobile device 82 may be configured to communicate via the network 88 according to various communication channels, preferably a wireless communication channel such as via a cellular network (e.g. according to a standard protocol, such as 3G or 4G) or via a Wi-Fi network.

The app installed on the mobile device 82 and the application server 84 may be configured to assist a user with managing their aerosol-generating apparatus 1, based on information communicated between the aerosol-generating apparatus 1 and the app, information communicated directly between the aerosol-generating apparatus 1 and the application server 84, and/or information communicated between the app and the application server 84.

The charging station 86 (if present) may be configured to charge (and optionally communicate with) the aerosol-generating apparatus 1, via a charging interface on the aerosol-generating apparatus 1. The charging interface on the smoking substitute device 10 may be a USB port, for example, which may allow the aerosol-generating apparatus 1 to be charged by any USB-compatible device capable of delivering power to the aerosol-generating apparatus 1 via a suitable USB cable (in this case the USB-compatible device would be acting as the charging station 86). In other examples, the charging station could be a docking station specifically configured to dock with the aerosol-generating apparatus 1 and charge the aerosol-generating apparatus 1 via the charging port on the aerosol-generating apparatus 1.

Referring to Fig. 7 an aerosol-generating apparatus 100, which may be implemented in any of the preceding examples, comprises an aerosol-generating unit 160 configured to generate an aerosol from an aerosol precursor 170, a processing resource 110 comprising a processing core 112, and a communications interface 150 for transmitting and receiving wireless communications.

The processing core 112 is configured to execute a plurality of processing threads for operating the aerosol-generating apparatus 100. The plurality of processing threads includes a communications processing thread 140 for administering a wireless communications protocol, and one or more apparatus control threads 130 for controlling the aerosol-generating unit 160.

The communications thread 140 is configured to operate the wireless communications, which in this case includes BLE. For example, the communications thread 140 is configured to receive a data payload and construct a BLE packet for sending to a peripheral device (e.g., a mobile phone) via the communications interface 150.

The communications thread 140 is assigned a higher priority in the processor core 112 than the one or more apparatus control threads 130. Therefore, the communications thread 140 has preferential access to the timing scheduling of the processor core 112, e.g. so that instructions (i.e., code/computationaltasks) in the communications thread 140 are scheduled to be executed in preference to instructions of the one or more apparatus control threads 130, including during the heating session. In practice, the plurality of processing threads may be scheduled for execution by a thread scheduler as described previously. In practice, the communications may be administered by multiple communications threads 140 and/or multiple processors 112. In this case, at least one of the communications threads 140 may share a processor core 112 and may have a higher priority than the one or more apparatus control threads 130 which may share that processor core 112.

The processor core 112 (or more specifically the code being executed in the communications thread) is configured to disable one or more functions of the wireless communications upon detection of one of a plurality of trigger events, depending on the trigger event that was detected.

For example, the processor core 112 may disable the communications upon detecting an inhalation from the apparatus 100 or during a heating session of the apparatus 100 (i.e., when a user is using the apparatus 100 to generate an aerosol). This may help to reduce a likelihood of the higher priority communications thread 140 disrupting the apparatus control threads 130 during the heating session. In this example, the processor core 112 may be configured to disable a BLE advertising function of the communications thread 140 during the heating session.

In practice, the communications thread 140 may be configured to construct BLE data packets comprising data for communicating to the peripheral device using the communications.

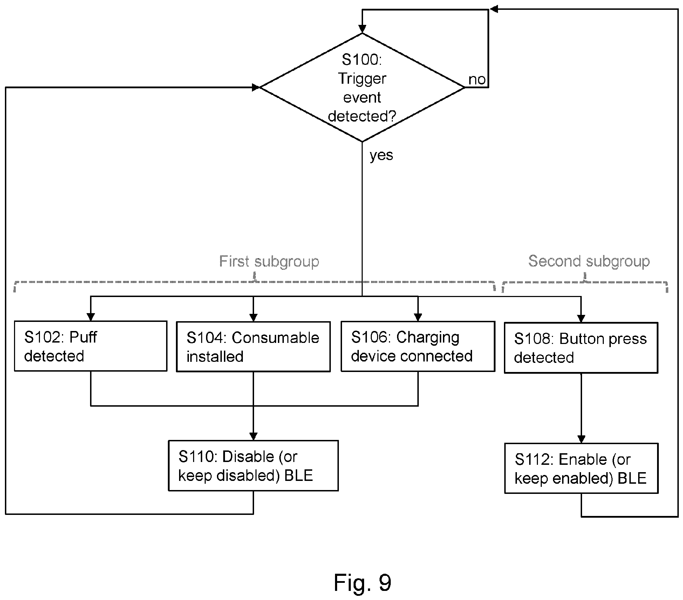

The communications processing thread may be configured to perform a data dump in which data stored on the aerosol-generating unit (e.g., usage data) is transmitted to the peripheral device by transmitting multiple data (e.g., BLE) packets. In a data dump, a preparation BLE packet may be communicated to the peripheral device before the data stored on the apparatus is transmitted to the peripheral device in a continuous stream of BLE data packets. To ensure that this process cannot be interrupted by a heating session beginning, the processor 112 may be configured to disable the aerosol-generating unit 160 (more particularly the heating system 164) of the aerosol-generating unit 160 during the data dump. Such as process is discussed in more detail below in relation to Fig. 9.

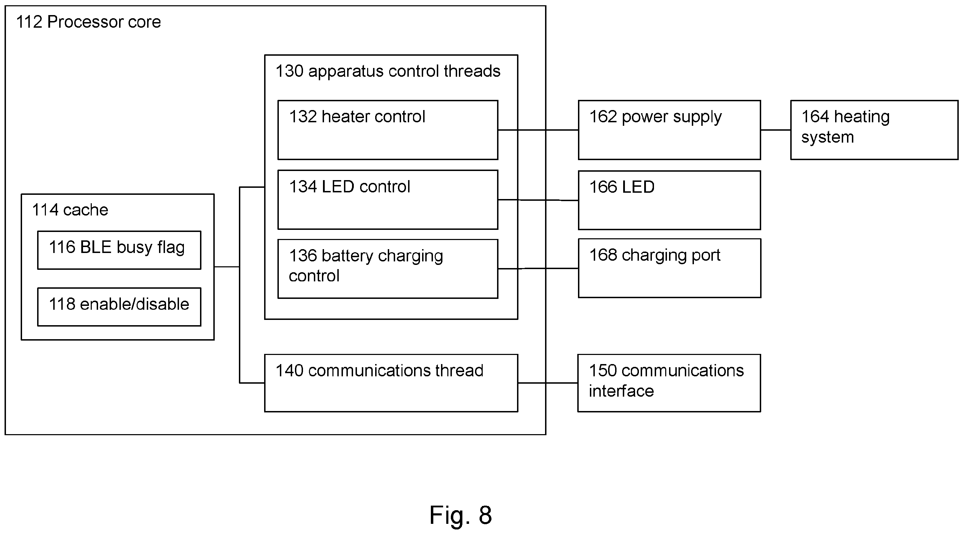

Fig. 8 shows aspects of the aerosol-generating apparatus 100 of Fig. 7 in more detail.

The aerosol-generating unit 160 comprises a heating system 164 for heating the aerosol precursor 170. The heating system 164 receives power from a power supply 162. The power supply 162 comprises a battery and one or more sensors (not shown) for sensing the current and/or voltage of the electrical power being supplied to the heating system 164.

The heating system 164 may include one or more resistive heating elements (other types of heating system 164 may also be used) which are located in proximity to the aerosol precursor 170 for heating the aerosol precursor 170 during the heating session. The electrical resistance of the resistive heating element typically varies with the temperature of the heating element. Therefore, the temperature of the heating system 164 may (indirectly) be monitored by monitoring the power draw of the heating system 164 from the power supply 162 using the one or more sensors.

A heater control thread 132 is executed on the processor 112 for controlling the heating system 164. In this example, the heater control thread 132 is configured to maintain the heating system 164 at a target power consumption for heating the aerosol precursor 170. To do this, the heater control thread 132 receives one or more sample variables indicative of a power consumption of the resistive heating element from the power supply 162, such as sample current and/or voltage, and adjust a control signal to the heating system 164 accordingly in order to maintain the heating system 164 at the target power consumption. The heater control thread 132 may be configured to sample and adjust the control of the heating system 164 in this way, e.g., at least every 1ms. In some examples, the control signal may be a PWM signal applied to the heating system 164, wherein the adjustment of the control signal involves varying the duty cycle of the PWM signal.

Also included in the apparatus 100 is a charging interface, which in this example is a charging port 168 for receiving a charging cable. Current received from the charging port 168 is used to charge the battery in the power supply 162. This process may be controlled by a battery charging control thread 136 of the processor 112.

A visual indicator, which in this example is an LED 166, is provided for providing status information to a user. A separate LED control thread 134 is provided to control the LED 166. For example, the LED control thread 134 may provide control signals to the LED 166 which cause it to flash, or to gradually fade on and off. In some examples, the LED control thread 134 may cause the LED 166 to flash during a large data exchange (i.e., data dump) as described above.

The processor 112 may further comprise shared processing resources which are accessible by each of the processing threads including a cache 114.

In use, the heater control thread 132 (or any other thread) may set an enable/disable comms flag 118 in the cache 114 (e.g. to "true"), or any other suitable shared memory storage, if a heating session of the apparatus 100 has been initiated. The communications thread 140 is configured to check the enable/disable comms flag 118 in the cache 114, and disable the one or more functions (e.g., BLE advertising) of the wireless communications if the enable/disable flag 118 is set, thereby disabling the one or more functions of the wireless communications during the heating session. When the heating session has finished, the enable/disable comms flag 118 may be reset (e.g. to "false").

Also provided in the cache 114 may be a BLE busy flag 116 configured to indicate if the communications thread 140 is busy. If the BLE busy flag 116 is set, then the initiation of a heating session can be disabled to prevent the communications thread 140 from being disrupted when it is busy. For example, when the communications thread 140 is performing a data dump via the communications interface 150 as described above, the communications thread 140 may set the BLE busy flag 116 (e.g. to "true"). The heater control thread 132 (or other thread) may be configured to check the BLE busy flag 116, and if the BLE busy flag 116 is set to true, disable the heating system 164 so that no heating sessions may be initiated during a data dump. When the data dump has finished, the communications thread 140 may reset the BLE busy flag 116 (e.g. to "false").

Fig. 9 shows a flowchart of an example method for controlling the aerosol-generating apparatus 100 of Figs. 7 and 8.

At step S100 the apparatus 100 is in a standby mode or in a sleep state until a trigger event is detected, such as a button press or an inhalation from the device. If the apparatus 100 was in a sleep state, then the apparatus wakes up in response to detecting the trigger event.

Next, the processor moves to one of steps S102 to S108 depending on the trigger event that was detected.

For example, if a trigger event included in a first subgroup of the plurality of trigger events is detected, then the processor 112 is configured to move to step S110 and disables the communications, which in this example includes BLE. Notably, if the communications are already disabled, for example when the apparatus wakes up in response to detecting a trigger event, the processor 112 may keep the communications disabled in this step. The first subgroup of trigger events includes detecting a puff from the apparatus 100 in step S102, detecting a consumable being installed in the apparatus 100 in step S104, and detecting a charging device being connected to the apparatus 100 in step S106. Notably, when a puff is detected in step S102, the apparatus control threads are configured to begin a heating session of the apparatus 100, not depicted in Fig. 9.

Alternatively, if a trigger event included in a second subgroup of the plurality of trigger events is detected, then the processor 112 is configured to move to step S112 and enables (or keeps enabled) the communications. In this example, the second subgroup comprises the detection of a button press in step S108. Accordingly, a user may manually wake up the apparatus 100 by pressing a button but without initiating a heating session.

After steps S110 or S112, the method then returns to step S100 to wait for another trigger event. For example, a puff may be detected causing the communications to be disabled and a heating session to begin or a second button press may be detected causing the apparatus 100 to enter a sleep state.

For example, the device is woken up with a button press, communications (e.g., BLE advertising) may be enabled for e.g., 10 seconds. If the device is woken up by other means i.e. the connection of a USB charger, the insertion of a consumable pod, or the detection of an inhalation this will not enable communications. After communications are enabled in step S112, (e.g., when BLE advertising is in progress and the apparatus is in an unpaired state or in a paired state) an inhalation may be taken and detected thereby causing a heating session to begin.

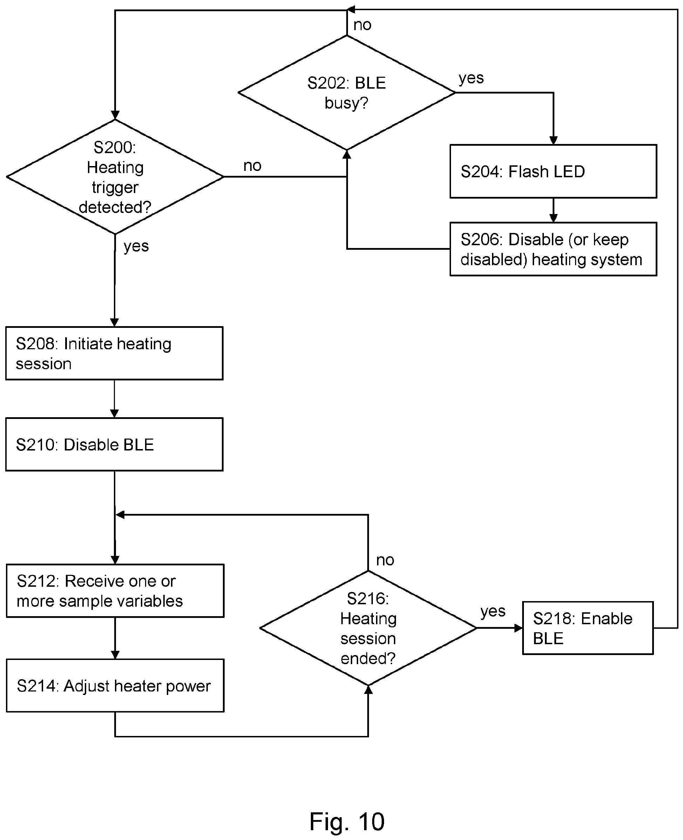

Fig. 10 shows a flowchart of an example method for controlling the aerosol-generating apparatus 100 of Figs. 7 and 8, wherein the processor 112 is configured to disable the one or more functions of the communications during a heating session of the apparatus 100. For example, the processor 112 may disable outgoing communications upon detection of a trigger event comprising an inhalation from the apparatus 100 so that aspects of the communications are not operating during the subsequent heating session.

At step S200 the processing resource 110 (or more specifically an apparatus control thread 130 running on the processor 112 of the processing resource 110) determines whether a heating trigger has been detected. The heating trigger is a trigger event which may be detected to initiate a new heating session, for example, a user inhaling from the apparatus 100, or a button on the apparatus 100 being pressed.

If no heating trigger is detected, then the processing resource 110 may check to see if the communications thread 140 is performing a data dump via BLE by checking the status of the BLE busy flag 116 in the cache 114. If the BLE busy flag 116 is not set, then the processor returns to step S200. This loop, comprising steps S200 and S202, may be repeated until a heating trigger is detected or a BLE data exchange is initiated. Accordingly, this loop may be referred to as a standby loop or state of the aerosol-generating apparatus 100.

However, if in step S202 the BLE busy flag 116 is set, e.g., indicating that the communications thread 140 is performing a data dump, then the processing resource 110 (or the relevant control thread of the processor 112) enters a holding loop comprising step S204 wherein the LED 166 is switched off or on (i.e., so that it flashes), and step S206 wherein the heating system 164 is disabled (or maintained in a disabled state). Steps S202 to S206 are repeated until the data exchange is finished and the BLE busy flag 116 is no longer set.

In this way, by setting the BLE busy flag 116, the data exchange cannot be interrupted by one of the trigger events in the first subgroup until the exchange is complete. For example, even if an inhalation is detected during this loop, the heating session may not be initiated until the data exchange is complete.

In step S200, if a heating trigger is detected (for example if a user begins inhaling form the apparatus 100 as detected by an airflow sensor) then the processing resource 110 moves to step S208 and initiates a heating session. For example, the heater control thread 132 may send a control signal to the heating system 164 to begin heating the aerosol precursor 170.

In step S210, one or more functions of the BLE communications (such as BLE advertising) is disabled. This may help to reduce the likelihood of the communications thread 140 executing instructions which could disrupt/interrupt the heater control thread 132 during the heating session.

Steps S212 to S216 form a heating session loop. At step S212 the heater control thread 132 receives one or more sample variables indicative of a power consumption of the heating system 164 from the power supply 162. For example, this may involve receiving a sample current and/or sample voltage. Next, in step S214 the heater control thread 132 adjusts a control signal to the heating system 164, e.g. so as to repeatedly enable and/or disable the power supply (e.g. using PWM) so as to maintain the heating system 164 at a target power consumption.

At step S216 the processing resource 110 determines whether the heating session is ended. For example, this may happen when an airflow sensor no longer detects airflow in the aerosol-generating apparatus 100 and/or when a predetermined period of time has elapsed after the heating session commenced. If the heating session is not finished, then the heating session loop is repeated. However, if the heating session is finished, then the processing resource 110 proceeds to step S218 where the one or more functions of the communications is optionally re-enabled. The processor then returns to step S200 of the standby loop until another heating session is initiated or the apparatus 100 is turned off.

## Claims

1. An aerosol-generating apparatus comprising:
an aerosol-generating unit configured to generate an aerosol from an aerosol precursor, and
a processor configured to execute a plurality of processing threads for operating the aerosol-generating apparatus, the plurality of processing threads including a communications processing thread for operating wireless communications, and one or more apparatus control threads for controlling the aerosol-generating unit; wherein:
the processor is configured to detect a trigger event, the trigger event being one of a plurality of trigger events detectable by the processor, the plurality of trigger events comprising a first subgroup of trigger events;
wherein the processor is configured to disable one or more functions of the wireless communications upon detection of a trigger event from the first subgroup.

2. The aerosol-generating apparatus of claim 1 wherein the processor is configured to execute the communications processing thread with a higher priority than the one or more apparatus control threads.

3. The aerosol-generating apparatus of claim 1 or claim 2 wherein the first subgroup of trigger events includes one or more of: an airflow sensor of the apparatus detecting an inhalation from the apparatus, a consumable being inserted into the apparatus, and/or a charging device being received by a charging interface of the apparatus.

4. The aerosol-generating apparatus of any preceding claim wherein the plurality of trigger events comprises a second subgroup of trigger events and the processor is configured to enable or keep enabled the one or more functions of the wireless communications upon detection of a trigger event from the second subgroup.

5. The aerosol-generating apparatus of claim 4 wherein the apparatus includes a wake switch, and the second subgroup of trigger events includes detecting an actuation of the wake switch.

6. The aerosol-generating apparatus of any preceding claim wherein the apparatus is configured to enter a sleep state,
wherein one or more of the trigger events is a wake event and the apparatus is configured to wake from the sleep state upon detection of a wake event, such that the processor is configured to disable the one or more functions of the communications upon waking of the apparatus, depending on the wake event that was detected.

7. The aerosol-generating apparatus of claim 6 wherein the one or more wake events includes one or more of: an airflow sensor of the apparatus detecting an inhalation from the apparatus, a consumable being inserted into the apparatus, a charging device being received by a charging interface of the apparatus and/or a wake switch being actuated.

8. The aerosol-generating apparatus of any preceding claim, wherein the processor is configured to disable the one of more functions of the wireless communications during a heating session of the aerosol-generating apparatus.

9. The aerosol-generating apparatus of any preceding claim wherein one or more of the apparatus control threads includes a heater control thread for controlling a heating system of the aerosol-generating unit to heat the aerosol precursor during a heating session for the apparatus,
wherein the heater control thread is configured to control the heating system by receiving one or more sample variables relating to the heating system and adjusting a control signal to the heating system based on the one or more sample variables.

10. The aerosol-generating apparatus of claim 9 wherein the heater control thread is configured to update the control signal at least every 2ms.

11. The aerosol-generating apparatus of any preceding claim, wherein
the communications processing thread is configured to perform a data dump in which data stored on the aerosol-generating apparatus is transmitted to a peripheral device by transmitting multiple data packets;
wherein the processor is configured to disable the aerosol-generating unit from generating the aerosol during the data dump.

12. The aerosol-generating apparatus of claim 11 wherein the communications processing thread is configured to set a flag in a shared memory of the processing threads during the data dump, and
one or more of the apparatus control threads are configured to disable the aerosol-generating unit from generating the aerosol upon determining that the flag is set.

13. The aerosol-generating apparatus of claims 11 or 12 further comprising a visual indicator for indicating if the generation of the aerosol is disabled;
wherein one or more of the apparatus control threads are configured to provide a visual indication using the visual indicator during the data dump for indicating that the aerosol-generating unit is disabled from generating the aerosol.

14. The aerosol-generating apparatus of any preceding claim wherein:
the one or more functions of the wireless communications disabled by the processor includes advertising of the aerosol-generating apparatus for establishing a connection with a peripheral device, and/or
wherein the wireless communications include Bluetooth Low Energy, BLE.

15. A method of controlling an aerosol-generating apparatus, the aerosol-generating apparatus comprising:
an aerosol-generating unit configured to generate an aerosol from an aerosol precursor, and
a processor configured to execute a plurality of processing threads for operating the aerosol-generating apparatus, the plurality of processing threads includes a communications processing thread for operating wireless communications, and one or more apparatus control threads for controlling the aerosol-generating unit;
wherein the method comprises:
detecting one of a plurality of trigger events, the plurality of trigger events comprising a first subgroup of trigger events; and
if the detected trigger event is in the first subgroup, disabling one or more functions of the wireless communications.
